# EUROPÄISCHE PATENTSCHRIFT

(11) **EP 2 214 935 B1**
(45) Veröffentlichungstag und Bekanntmachung des Hinweises auf die Patenterteilung: **10.05.2017**
(21) Anmeldenummer: 08854192.5
(22) Anmeldetag: 11.11.2008
(51) Int. Cl.: B60S 1/38

(54) **WISCHGUMMI FÜR SCHEIBENWISCHER**
WIPER RUBBER FOR WINDSHIELD WIPERS
LAME D'ESSUIE-GLACE EN CAOUTCHOUC

(30) Priorität: 28.11.2007 DE 102007057133
(43) Veröffentlichungstag der Anmeldung: 11.08.2010
(73) Patentinhaber: Robert Bosch GmbH, 70442 Stuttgart (DE)
(72) Erfinder: PIETERS, Eric, 6369 AK Simpelveld (NL); LAY, Reiner, 52072 Aachen (DE); KLEINKNECHT, Harald, 55232 Alzey (DE); PARTON, Hilde, 3052 Oud-Heverlee (Blanden) (BE)
(86) Internationale Anmeldenummer: PCT/EP2008/065322
(87) Internationale Veröffentlichungsnummer: WO 2009/068434

(56) Entgegenhaltungen:
- DE-A1- 19 926 986
- DE-A1- 19 944 274

## Beschreibung

Die vorliegende Erfindung bezieht sich auf ein Wischgummi für Scheibenwischer sowie auf dessen Verwendung nach dem Oberbegriff der unabhängigen Ansprüche.

### Stand der Technik

Übliche Wischblätter für Scheibenwischer sind aus Gummimaterialien gefertigt, die neben einer hohen Beständigkeit gegenüber Ozon und UV-Strahlung insbesondere eine hohe Abriebbeständigkeit und einen geringen Reibungskoeffizienten auf einer zu reinigenden Glasscheibe aufweisen. Dieses anspruchsvolle Anforderungsprofil kann nur bei geeigneter Auswahl der verwendeten Gummimaterialien sowie durch geeignete Verarbeitungsbedingungen erreicht werden. Dabei werden insbesondere hohe Anforderungen an diejenigen Verarbeitungshilfsstoffe gestellt, die während der Vulkanisation des entsprechenden Gummimaterials zu einem geeigneten Vernetzungsgrad führen. Dies sind insbesondere als Schwefeldonoren für die Ausbildung von Sulfidbrücken oder als Vulkanisationsbeschleunigersystem fungierende Substanzen.

Üblicherweise wird heute zur Vulkanisation von Gummimischungen aus Naturkautschuk und Chloropren Ethylenthioharnstoff (ETU) eingesetzt. Dieser beschleunigt die Aushärtung sowohl des Naturkautschuks als auch des Polychloroprens. Aus arbeitsmedizinischen Gründen ist jedoch der Einsatz von ETU unerwünscht, da er im Verdacht steht, teratogen bzw. karzinogen zu sein.

Weiterhin ist bekannt, Tetramethylthiuramdisulfid (TMTD) als Schwefeldonor für die Vulkanisation von Gummimaterialien einzusetzen. Dessen Wirkmechanismus beruht auf der Freisetzung von Nitrosaminen, die ebenfalls vom gesundheitlichen Standpunkt her bedenklich sind.

Darüber hinaus sind alternative Gummimaterialien aus der US 6,495,625 B1 bekannt, wobei diese ein Vernetzungsmittel sowie einen Vulkanisationsbeschleuniger enthalten.

### Offenbarung der Erfindung

Aufgabe der vorliegenden Erfindung ist es, ein Wischgummi für Scheibenwischer bereitzustellen, das einem geeigneten Anforderungsprofil gerecht wird und arbeitsmedizinischen Anforderungen während der Herstellung genügt.

Die der Erfindung zugrunde liegende Aufgabe wird in vorteilhafter Weise durch ein Wischgummi für Scheibenwischer mit den kennzeichnenden Merkmalen des Anspruchs 1 gelöst. Dies beruht insbesondere darauf, dass im Material des Wischgummis zumindest im unvulkanisierten Zustand ein Härter sowie ein Schwefeldonor enthalten ist, sodass das mechanische Anforderungsprofil, namentlich eine hohe Abriebbeständigkeit sowie ein geringer Reibungskoeffizient auf einer zu reinigenden Oberfläche, erfüllt wird.

Weitere vorteilhafte Ausführungsformen der vorliegenden Erfindung ergeben sich aus den Unteransprüchen.

So ist von Vorteil, wenn als Vernetzungsmittel ein Triazin oder ein Thiadiazol eingesetzt wird. Weiterhin wird als Schwefeldonor beispielsweise ein Dithiophosphat und/oder ein Caprolactamdisulfid eingesetzt. Die genannten Verbindungen haben den Vorteil, dass sie vom arbeitsmedizinischen Standpunkt aus deutlich günstiger in der Handhabung sind als ETU- bzw. TMTD-haltige Vulkanisationssysteme.

Weiterhin ist von Vorteil, wenn das Material des Wischgummis zumindest im unvulkanisierten Zustand zusätzlich einen Vulkanisationsbeschleuniger, beispielsweise in Form eines Sulfenamids, eines Guanidins, eines Thiurams und/oder eines Thiazols enthält. Ein Vulkanisationssystem in Form einer Kombination der als Vernetzungsmittel, Schwefeldonor bzw. Vulkanisationsbeschleuniger genannten Substanzen führt zu einem Wischgummi, der den entsprechenden mechanischen Anforderungen gerecht wird und während der Herstellung kein erhöhtes Gesundheitsrisiko birgt.

Gemäß einer besonders vorteilhaften Ausführungsform der vorliegenden Erfindung enthält das Material des Wischgummis als Gummikomponente eine Mischung von Naturkautschuk mit Chloropren, Polyisopren und/oder zumindest teilweise epoxidiertem Naturkautschuk. Diese genannten Gummikomponenten lassen sich mit dem bereits genannten Vulkanisationssystem aus Vernetzungsmittel, Vulkanisationsbeschleuniger und Schwefeldonor in besonders vorteilhafter Weise während der Vulkanisation aushärten.

### Kurze Beschreibung der Zeichnungen

Ein Ausführungsbeispiel der Erfindung ist in der Zeichnung dargestellt und in der nachfolgenden Beschreibung näher erläutert. Es zeigt
- Figur 1: eine Auftragung des kinetischen Verhaltens zweier Gummimischungen mit unterschiedlichen Gummikomponenten sowie einer korrespondierenden Mischung derselben über der Zeit, wobei die jeweiligen Vulkanisationssysteme auf eine rasche Aushärtung der jeweiligen Einzelgummikomponente ausgelegt sind,
- Figur 2: eine Auftragung des kinetischen Verhaltens von Gummimischungen in Abhängigkeit von der Art des zugesetzten Härters über der Zeit, wobei der Härter auf die Aushärtung der betreffenden Einzelgummikomponente hin optimiert ist,
- Figur 3: eine Auftragung des kinetischen Verhaltens zweier Gummimischungen mit unterschiedlichen Gummikomponenten sowie einer Mischung derselben über der Zeit gemäß einer ersten Ausführungsform der vorliegenden Erfindung und
- Figur 4: eine Auftragung des kinetischen Verhaltens von Gummimischungen gemäß weiterer Ausführungsformen der vorliegenden Erfindung, wobei das Mischungsverhältnis der Gummikomponenten variiert wurde.

### Ausführungsbeispiele

Ein erfindungsgemäßes Wischgummi für Wischblätter von Scheibenwischern eines Kraftfahrzeugs umfasst zunächst eine Matrix aus einem Gummimaterial, die als Gummikomponenten beispielsweise eine Mischung von Naturkautschuk (NR) mit Polychloropren (CR), Polyisopren (IR) und/oder zumindest teilweise epoxidiertem Naturkautschuk (ENR) enthält. Dabei weist der epoxidierte Naturkautschuk beispielsweise einen Epoxidierungsgrad von 15 bis 50, vorzugsweise von 15 bis 25 Gew.% auf.

Bezogen auf den Gesamtgehalt an Gummikomponenten des Wischgummis beträgt der Gehalt an Chloropren beispielsweise mindestens 20 Gew.%, vorzugsweise mindestens 25 Gew.%, insbesondere 40 Gew.%. Weiterhin beträgt der Gehalt an Naturkautschuk, Polyisopren und/oder epoxidiertem Naturkautschuk beispielsweise mindestens 30 Gew.% bezogen auf den Gesamtgehalt an Gummikomponenten, vorzugsweise 40 Gew.% und insbesondere 60 Gew.%.

Weiterhin enthält das Material des Wischgummis beispielsweise einen oder mehrere Füllstoffe. Durch geeignete Gestaltung der Füllstoffmischung können die mechanischen Eigenschaften des resultierenden Wischgummis in hohem Maße beeinflusst werden. Als Füllstoffe kommen neben Ofen- bzw. Thermalruss auch sogenannte weiße Füllstoffe wie Zinkoxid, Erdalkalisulfate, Erdalkalikarbonate und andere in Betracht. Dabei wird beispielsweise ein Füllstoffgehalt von beispielsweise 20 bis 150 Gewichtsteilen, vorzugsweise 20 bis 100 Gewichtsteilen und insbesondere 25 bis 70 Gewichtsteilen bezogen auf 100 Gewichtsteile an im Gummimaterial enthaltenen Gummikomponenten beigemischt.

Um einen ausreichenden Vernetzungsgrad der Gummikomponenten während des Vulkanisationsprozesses des Wischgummimaterials zu gewährleisten, enthält das Material des Wischgummis zumindest im unvulkanisierten Zustand eine Kombination eines entsprechenden Vernetzungsmittels mit Schwefel und/oder mit einer als Schwefeldonor fungierenden Substanz. Dabei wird als Schwefeldonor eine chemische Substanz verstanden, die unter den Bedingungen einer Vulkanisation Schwefel in neutraler oder anionischer Form als Reaktionspartner zur Ausbildung von Disulfidbrücken im Gummimaterial zur Verfügung stellt. Als Schwefeldonor eignen sich beispielsweise Dithiophosphate, Benzothiazole, insbesondere nicht Nitrosamine freisetzende Thiurame sowie Caprolactamdisulfide bzw. Mischungen derselben. Der Schwefeldonor ist im Material des Wischgummis zumindest in dessen unvulkanisiertem Zustand beispielsweise zu 0.01 bis 8 Gew.%, vorzugsweise zu 0.3 bis 5 Gew.% und insbesondere zu 0.5 bis 3 Gew.% bezogen auf den Gesamtgehalt an Gummikomponenten enthalten.

Als Vernetzungsmittel werden beispielsweise Triazine oder Thiadiazole bzw. Mischungen derselben eingesetzt. Das Vernetzungsmittel ist zumindest im unvulkanisierten Zustand des Wischgummis in dessen Material beispielsweise zu 0.1 bis 8 Gew.%, vorzugsweise zu 0.3 bis 5 Gew.% und insbesondere zu 0.5 bis 3 Gew.% bezogen auf den Gesamtgehalt an Gummikomponenten enthalten.

Um eine rasche Vulkanisation des Wischgummis ohne Verlust an mechanischer Strapazierfähigkeit zu erreichen, wird dem Material des Wischgummis vorzugsweise weiterhin ein Vulkanisationsbeschleuniger zugesetzt. Dieser kann beispielsweise in Form eines Sulfenamides, wie beispielsweise einem Thiazolsulfenamid, eines Guanidins, eines Thiurams, eines Alkylthiazolidinthions oder in Form eines Thiazols ausgeführt sein. Dabei ist der Vulkanisationsbeschleuniger zumindest im unvulkanisierten Zustand des Wischgummis beispielsweise zu 0.1 bis 8 Gew.%, vorzugsweise zu 0.3 bis 5 Gew.% und insbesondere zu 0.5 bis 3 Gew.% im Material des Wischgummis enthalten.

Weiterhin kann ein sogenannter sekundärer Vulkanisationsbeschleuniger dem Material des Wischgummis in unvulkanisiertem Zustand zugesetzt werden. Dieser hat die Funktion, eine weitere, zielgerichtete Beschleunigung des Vulkanisationsprozesses erreichen zu können. Dabei werden als sekundärer Vulkanisationsbeschleuniger beispielsweise Dithiophosphate wie z.B. Übergangmetallaklyldithiophosphate zugesetzt. Diese sekundären Vulkanisationsbeschleuniger sind im Material des Wischgummis zumindest in dessen unvulkanisiertem Zustand beispielsweise zu 0.01 bis 5, vorzugsweise zu 0.3 bis 3 Gew.% bezogen auf den Gesamtgehalt an Gummikomponenten enthalten.

Neben den Vulkanisationsbeschleunigern kann zusätzlich ein Metalloxid wie beispielsweise Magnesiumoxid oder Zinkoxid dem Material des Wischgummis zugesetzt sein. Diese aktivieren und regeln die Vulkanisationsgeschwindigkeit.

Das beschriebene Wischgummi eignet sich in vorteilhafter Weise für Wischblätter von Scheibenwischern insbesondere für mobile Anwendungen sowie für Türdichtungen.

### Beispiel 1

Es werden Gummimischungen der folgenden Zusammensetzungen einer Vulkanisationsreaktion unterzogen.

| | | | **1** | **2** | **3** |
|---|---|---|---|---|---|
| 1 | NR | | 100 | | 60 |
| 2 | CR | | | 100 | 40 |
| **Mechanische Eigenschaften** | | | | | |
| | Shorehärte | °SH A | 63.0 | 58.0 | 55.0 |
| | Modul 100% | N/mm² | 2.3 | 2.1 | 1.6 |
| | Reißfestigkeit | N/mm² | 21.6 | 13.6 | 20.4 |
| | Bruchdehnung | % | 523 | 373 | 639 |
| | Zugverformungsrest | % | 22 | 22 | 27 |

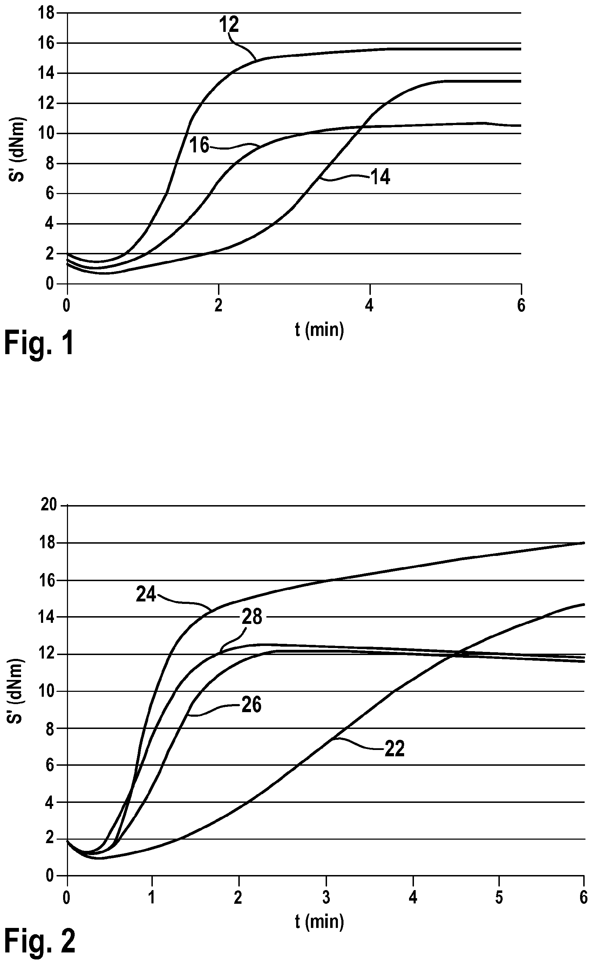

Das kinetische Verhalten der Gummimischungen gemäß Beispiel 1 während der Vulkanisationsreaktion ist in Figur 1 in Form einer Auftragung des elastischen Moments S' der Gummimischungen über der Zeit dargestellt.

In Figur 1 ist das kinetische Verhalten zweier Gummisysteme verdeutlicht, die als Gummikomponente lediglich Naturkautschuk bzw. Chloropren enthalten sowie jeweils ein zur Vulkanisation dieser einen Gummikomponente optimiertes Vulkanisationssystem. Dabei entspricht die Messkurve 12 dem kinetischen Verhalten einer naturkautschukhaltigen Gummimischung und 14 dem kinetischen Verhalten einer chloroprenhaltigen Gummimischung.

Werden beide Gummifraktionen miteinander im Verhältnis 60 zu 40 gemischt, so resultiert die Messkurve 16. Es ist erkennbar, dass die Verwendung einer Mischung jeweils vulkanisationsoptimierter Systeme für Naturkautschuk und Chloropren nicht zu einem optimierten System für ein Gummisystem führt, das Naturkautschuk und Chloropren in Mischung enthält.

### Beispiel 2

Es werden Gummimischungen folgender Zusammensetzungen einer Vulkanisationsreaktion unterzogen.

| | | | **1** | **2** | **3** | **4** |
|---|---|---|---|---|---|---|
| 1 | NR | | 60 | 60 | | |
| 2 | CR | | 40 | 40 | 100 | 100 |
| 3 | MAstifizierungsmittel | | 0.63 | 0.63 | 0.63 | 0.63 |
| 4 | MgO | | 1.5 | 1.5 | 1.5 | 1.5 |
| 5 | Ozonschutz | | 0.8 | 0.8 | 0.8 | 0.8 |
| 6 | Verarbeitungshilfsstoffe | | 2 | 2 | 2 | 2 |
| 7 | Ruß | | 27 | 27 | 27 | 27 |
| 8 | Alkylthiazolidinthion | | | 4 | | 4 |
| 9 | Schwefel | | 1.5 | 1.5 | 1.5 | 1.5 |
| 10 | ZnO | | 5.5 | 5.5 | 5.5 | 5.5 |
| 11 | Benzothiazolsulfenamid | | 1 | 1 | 1 | 1 |
| 12 | Schwefeldonor | | 2 | 2 | 2 | 2 |
| 13 | Triazin | | 1 | 1 | 1 | 1 |
| 14 | Dithiophosphat | | 2 | 2 | 2 | 2 |
| 15 | Verzögerer | | 0.5 | 0.5 | 0.5 | 0.5 |
| | | | | | | |
| **Mechanische Eigenschaften** | | | | | | |
| | Shore Härte | °SH A | 57.0 | 57.5 | 54.0 | 63.5 |
| | Modul 100% | N/mm² | 2.2 | 2.4 | 1.4 | 3.0 |
| | Reißfestigkeit | N/mm² | 17.8 | 20.0 | 16.1 | 13.8 |
| | Bruchdehnung | % | 746 | 821 | 906 | 562 |
| | Zugverformungsrest | % | 17.8 | 21.1 | 45.0 | 38.0 |

Das kinetische Verhalten der Gummimischungen gemäß Beispiel 2 während der Vulkanisationsreaktion ist in Figur 2 in Form einer Auftragung des elastischen Moments S' der Gummimischungen über der Zeit dargestellt.

In Figur 2 ist das kinetische Verhalten zweier Gummisysteme verdeutlicht, die als Gummikomponente lediglich Chloropren enthalten, wobei eines der Gummisysteme ein Alkylthiazolidinthion als einen zur Vulkanisation von Chloropren optimierten Vulkanisationsbeschleuniger enthält. Dabei entspricht die Messkurve 22 dem kinetischen Verhalten einer chloroprenhaltigen Gummimischung ohne Alkylthiazolidinthion und die Messkurve 24 dem kinetischen Verhalten einer chloroprenhaltigen Gummimischung mit Alkylthiazolidinthion.

Weiterhin ist das kinetische Verhalten zweier Gummisysteme verdeutlicht, die jeweils als Gummikomponente eine Mischung von CR und NR enthalten, wobei eines der Gummisysteme Alkylthiazolidinthion als Vulkanisationssystem enthält. Dabei entspricht die Messkurve 26 dem kinetischen Verhalten einer CR-/NRhaltigen Gummimischung ohne Alkylthiazolidinthion und die Messkurve 28 dem kinetischen Verhalten einer CR-/NRhaltigen Gummimischung mit Alkylthiazolidinthion als Vulkanisationssystem.

Es ist erkennbar, dass der Zusatz von Alkylthiazolidinthion nicht nur das kinetische Verhalten eines reinen Chloroprenmaterials während der Vulkanisation stark beeinflusst, sondern auch das Vulkanisationsverhalten einer Mischung von Naturkautschuk und Chloropren zwar nicht ausgeprägt so doch positiv beeinflusst. Es besteht jedoch offensichtlich kein linearer Zusammenhang, aus dem sich das Vulkanisationsverhalten einer NR/CR-haltigen Gummimischung ableiten ließe.

Ferner hat der Zusatz von Alkylthiazolidinthion zu der ausschließlich chloroprenhaltigen Mischung einen deutlichen Einfluss auf das spätere mechanische Verhalten des resultierenden Gummimaterials. Die ausschließlich chloroprenhaltige Mischung zeigt ein deutlich ansteigendes Modul 100% bzw. Shore-Härte, in der Nr/CR-haltigen Mischung lässt sich nur ein geringer Effekt feststellen.

### Beispiel 3

Es werden Gummimischungen der folgenden Zusammensetzungen einer Vulkanisationsreaktion unterzogen.

| | | | **1** | **2** | **3** |
|---|---|---|---|---|---|
| 1 | NR | | 60 | 100 | |
| 2 | CR | | 40 | | 100 |
| 3 | Mastifizierungsmittel | | 0.63 | 0.63 | 0.63 |
| 4 | MgO | | 1 | 1 | 1 |
| 5 | Ozonschutz | | 0.8 | 0.8 | 0.8 |
| 6 | Verarbeitungshilfsstoffe | | 2 | 2 | 2 |
| 7 | Ruß | | 27 | 27 | 27 |
| 8 | Schwefel | | 1.5 | 1.5 | 1.5 |
| 9 | ZnO | | 5.5 | 5.5 | 5.5 |
| 10 | Aminmodifizierte Fettsäuren | | 2 | 2 | 2 |
| 11 | Dithiophosphat | | 2 | 2 | 2 |
| 12 | Benzothiazol | | 1 | 1 | 1 |
| 13 | Schwefeldonor (Dithiophosphat) | | 2 | 2 | 2 |
| 14 | Triazin | | 0.5 | 0.5 | 0.5 |
| 15 | Verzögerer | | 1 | 1 | 1 |
| | | | | | |
| **Mechanische Eigenschaften** | | | | | |
| | Shore Härte | °SH A | 53.0 | 49.5 | 52.0 |
| | Modul 100% | N/mm² | 1.7 | 1.3 | 1.2 |
| | Reißfestigkeit | N/mm² | 19.7 | 17.5 | 12.2 |
| | Bruchdehnung | % | 656 | 572 | 857 |
| | Zugverformungsrest | % | 16.4 | 15.3 | >45.3 |

Das kinetische Verhalten der Gummimischungen gemäß Beispiel 3 während der Vulkanisationsreaktion ist in Figur 1 in Form einer Auftragung des elastischen Moments S' der Gummimischung über der Zeit dargestellt. Dabei bezeichnet 30 das kinetische Verhalten einer Gummimischung, die als Gummikomponente lediglich Naturkautschuk enthält, 32 das kinetische Verhalten einer Gummimischung die als Gummikomponente lediglich Chloropren enthält und 34 das kinetische Verhalten einer Gummimischung, die als Gummikomponente eine Mischung von Naturkautschuk und Chloropren aufweist unter Verwendung eines geeigneten Vulkanisationssystems, bestehend aus Schwefeldonor, Härter und Vulkanisationsbeschleuniger.

Bei Betrachtung der Zugdehnungseigenschaften wird der synergistische Effekt eines Verschnitts von NR uns CR in diesem Beispiel deutlich. So sind die Reissfestigkeit und das Modul 100% höher als im Falle der Verwendung der Einzelkomponenten CR und NR alleine.

Weiterhin ist zu erkennen, dass das erfindungsgemäße Vulkanisationssystem zwar für die Vernetzung von Gummimischungen, die als Gummikomponente lediglich CR bzw. NR enthalten nur bedingt, für die Vernetzung einer Gummimischung, die ein Gemisch von NR und CR umfasst, jedoch sehr gut geeignet ist.

### Beispiel 4

Es werden Gummimischungen folgender Zusammensetzungen einer Vulkanisationsreaktion unterzogen.

| | | | **1** | **2** | **3** | **4** |
|---|---|---|---|---|---|---|
| 1 | NR | | 70 | 60 | 50 | 40 |
| 2 | CR | | 30 | 40 | 50 | 60 |
| 3 | Mastifizierungsmittel | | 0.63 | 0.63 | 0.63 | 0.63 |
| 4 | MgO | | 1.5 | 1.5 | 1.5 | 1.5 |
| 5 | Ozonschutz | | 0.8 | 0.8 | 0.8 | 0.8 |
| 6 | Verarbeitungshilfsstoffe | | 2 | 2 | 2 | 2 |
| 7 | Ruß | | 27 | 27 | 27 | 27 |
| 8 | Schwefel | | 1.5 | 1.5 | 1.5 | 1.5 |
| 9 | ZnO | | 5.5 | 5.5 | 5.5 | 5.5 |
| 10 | Benzothiazolsulfenamid | | 1 | 1 | 1 | 1 |
| 11 | Schwefeldonor | | 2 | 2 | 2 | 2 |
| 12 | Triazin | | 1 | 1 | 1 | 1 |
| 13 | Dithiophosphat | | 2 | 2 | 2 | 2 |
| 14 | Verzögerer | | 0.5 | 0.5 | 0.5 | 0.5 |
| | | | | | | |
| **Mechanische Eigenschaften** | | | | | | |
| | Shore Härte | °SH A | 58.0 | 56.5 | 58.5 | 59.5 |
| | Modul 100% | N/mm² | 2.2 | 2.2 | 2.5 | 2.6 |
| | Reißfestigkeit | N/mm² | 19.9 | 21.0 | 18.8 | 16.4 |
| | Bruchdehnung | % | 733 | 871 | 760 | 653 |
| | Zugverformungsrest | % | 11.7 | 12.8 | 16.1 | 23.3 |

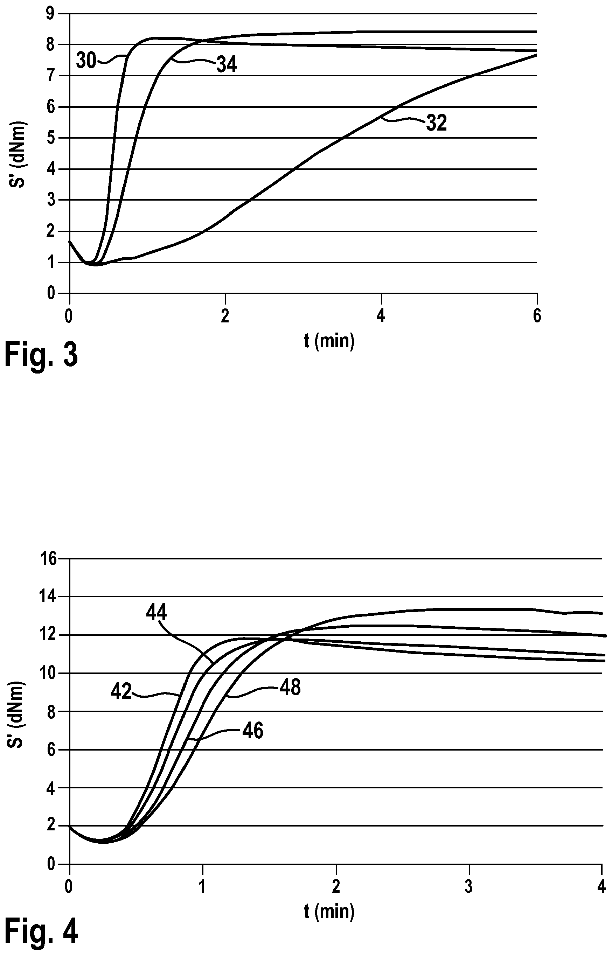

Das kinetische Verhalten der Gummimischungen 1 bis 4 gemäß Beispiel 4 während einer Vulkanisationsreaktion ist in Figur 4 in Form einer Auftragung des elastischen Moments S' der Gummimischungen über der Zeit dargestellt.

In Figur 4 ist das kinetische Verhalten von Gummimischungen verdeutlicht, die als Gummikomponente Mischungen von NR und CR enthalten. Dabei entspricht die Messkurve 42 dem kinetischen Verhalten der Gummimischung 1, die Messkurve 44 dem kinetischen Verhalten der Gummimischung 2, die Messkurve 46 dem kinetischen Verhalten der Gummimischung 3 und die Messkurve 48 dem kinetischen Verhalten der Gummimischung 4.

Es ist erkennbar, dass das Mischungsverhältnis von Naturkautschuk und Chloropren einen deutlichen Einfluss auf die Aushärtungskinetik der Vulkanisationsreaktion zeigt.

## Patentansprüche

1. Wischgummi für Scheibenwischer umfassend mindestens eine durch Vulkanisation ausgehärtete Gummikomponente, **dadurch gekennzeichnet, dass** das Material des Wischgummis zumindest im unvulkanisierten Zustand eine Kombination eines Vernetzungsmittels mit Schwefel und/oder mit einem Schwefeldonor enthält.

2. Wischgummi nach Anspruch 1, **dadurch gekennzeichnet, dass** das Vernetzungsmittel ein Triazin und/oder ein Thiadiazol ist.

3. Wischgummi nach einem der Ansprüche 1 bis 2, **dadurch gekennzeichnet, dass** der Gehalt an Vernetzungsmittel, Schwefel und Schwefeldonor zumindest im unvulkanisierten Zustand des Wischgummis 0.3 bis 30 Gew.% bezogen auf den Gesamtgehalt an Gummikomponenten im Material des Wischgummis beträgt.

4. Wischgummi nach einem der vorhergehenden Ansprüche, **dadurch gekennzeichnet, dass** der Schwefeldonor ein Dithiophosphat, ein Thiuram und/oder ein Caprolactamdisulfid ist.

5. Wischgummi nach einem der vorhergehenden Ansprüche, **dadurch gekennzeichnet, dass** der Schwefeldonor zumindest im unvulkanisierten Zustand des Wischgummis zu 0.01 bis 8 Gew.% bezogen auf den Gesamtgehalt an Gummikomponenten im Material des Wischgummis enthalten ist.

6. Wischgummi nach einem der vorhergehenden Ansprüche, **dadurch gekennzeichnet, dass** das Material des Wischgummis zumindest im unvulkanisierten Zustand zusätzlich einen Vulkanisationsbeschleuniger enthält.

7. Wischgummi nach Anspruch 6, **dadurch gekennzeichnet, dass** der Vulkanisationsbeschleuniger ein Sulfenamid, ein Guanidin, ein Thiuram, ein Alkylthiazolidinthion und/oder ein Thiazol ist.

8. Wischgummi nach Anspruch 7, **dadurch gekennzeichnet, dass** das Sulfenamid ein Thiazolsulfenamid ist.

9. Wischgummi nach einem der Ansprüche 7 bis 8, **dadurch gekennzeichnet, dass** der Vulkanisationsbeschleuniger zumindest im unvulkanisierten Zustand des Wischgummis zu 0.1 bis 8 Gew.% bezogen auf den Gesamtgehalt an Gummikomponenten im Material des Wischgummis enthalten ist.

10. Wischgummi nach einem der vorhergehenden Ansprüche, **dadurch gekennzeichnet, dass** ein sekundärer Vulkanisationsbeschleuniger in Form eines Übergangsmetallalkyldithiophosphats vorgesehen ist.

11. Wischgummi nach einem der vorhergehenden Ansprüche, **dadurch gekennzeichnet, dass** als Gummikomponente eine Mischung von Chloropren mit Naturkautschuk, Polyisopren und/oder zumindest teilweise epoxidiertem Naturkautschuk vorgesehen ist.

12. Wischgummi nach Anspruch 11, **dadurch gekennzeichnet, dass** Chloropren zu mindestens 20 Gew.% bezogen auf den Gesamtgehalt an Gummikomponenten enthalten ist.

13. Wischgummi nach Anspruch 11 oder 12, **dadurch gekennzeichnet, dass** Naturkautschuk, Polyisopren oder epoxidierter Naturkautschuk zu mindestens 30 Gew.% bezogen auf den Gesamtgehalt an Gummikomponenten enthalten ist.

14. Wischgummi nach einem der vorhergehenden Ansprüche, **dadurch gekennzeichnet, dass** das Material des Wischgummis zusätzlich ein Metalloxid enthält.

15. Verwendung eines Wischgummis nach mindestens einem der vorhergehenden Ansprüche in Wischblättern für mobile Anwendungen oder in Türdichtungen.

## Claims

1. Wiper rubber for windshield wipers encompassing at least one vulcanization-hardened rubber component, **characterized in that**, at least in the unvulcanized state, the wiper rubber material comprises a combination of a crosslinking agent with sulfur and/or with a sulfur donor.

2. Wiper rubber according to Claim 1, **characterized in that** the crosslinking agent is a triazine and/or a thiadiazole.

3. Wiper rubber according to any of Claims 1 to 2, **characterized in that**, at least in the unvulcanized state of the wiper rubber, the content of crosslinking agent, sulfur, and sulfur donor, based on the total content of rubber components in the wiper rubber material, is from 0.3 to 30% by weight.

4. Wiper rubber according to any of the preceding claims, **characterized in that** the sulfur donor is a dithiophosphate, a thiuram, and/or a caprolactam disulfide.

5. Wiper rubber according to any of the preceding claims, **characterized in that**, at least in the unvulcanized state of the wiper rubber, the amount of the sulfur donor present, based on the total content of rubber components in the wiper rubber material, is from 0.01 to 8% by weight.

6. Wiper rubber according to any of the preceding claims, **characterized in that**, at least in the unvulcanized state, the wiper rubber material also comprises a vulcanization accelerator.

7. Wiper rubber according to Claim 6, **characterized in that** the vulcanization accelerator is a sulfenamide, a guanidine, a thiuram, an alkylthiazolidinethione and/or a thiazole.

8. Wiper rubber according to Claim 7, **characterized in that** the sulfenamide is a thiazolesulfenamide.

9. Wiper rubber according to any of Claims 7 to 8, **characterized in that**, at least in the unvulcanized state of the wiper rubber, the amount of the vulcanization accelerator present, based on the total content of rubber components in the wiper rubber material, is from 0.1 to 8% by weight.

10. Wiper rubber according to any of the preceding claims, **characterized in that** a secondary vulcanization accelerator has been provided in the form of a transition metal alkyl dithiophosphate.

11. Wiper rubber according to any of the preceding claims, **characterized in that** the rubber component provided comprises a mixture of chloroprene with natural rubber, with polyisoprene, and/or with at least to some extent epoxidized natural rubber.

12. Wiper rubber according to Claim 11, **characterized in that** the amount of chloroprene present, based on the total content of rubber components, is at least 20% by weight.

13. Wiper rubber according to Claim 11 or 12, **characterized in that** the amount of natural rubber, polyisoprene, or epoxidized natural rubber present, based on the total content of rubber components, is at least 30% by weight.

14. Wiper rubber according to any of the preceding claims, **characterized in that** the wiper rubber material also comprises a metal oxide.

15. Use of a wiper rubber according to at least one of the preceding claims in wiper blades for mobile applications or in door seals.

## Revendications

1. Lame en caoutchouc pour essuie-glace, comprenant au moins un composant de caoutchouc durci par vulcanisation, **caractérisée en ce que** le matériau de la lame en caoutchouc, au moins dans l'état non vulcanisé, contient une combinaison d'un réticulant avec du soufre et/ou avec un donneur de soufre.

2. Lame en caoutchouc selon la revendication 1, **caractérisée en ce que** le réticulant est une triazine et/ou un thiadiazole.

3. Lame en caoutchouc selon l'une quelconque des revendications 1 à 2, **caractérisée en ce que** la teneur en réticulant, en soufre et en donneur de soufre, au moins dans l'état non vulcanisé de la lame en caoutchouc, est de 0,3 à 30% en poids par rapport à la teneur totale en composants de caoutchouc dans le matériau de la lame en caoutchouc.

4. Lame en caoutchouc selon l'une quelconque des revendications précédentes, **caractérisée en ce que** le donneur de soufre est un dithiophosphate, un thiuram et/ou un disulfure de caprolactame.

5. Lame en caoutchouc selon l'une quelconque des revendications précédentes, **caractérisée en ce que** le donneur de soufre, au moins dans l'état non vulcanisé de la lame en caoutchouc, est contenu à raison de 0,01 à 8% en poids par rapport à la teneur totale en composants de caoutchouc dans le matériau de la lame en caoutchouc.

6. Lame en caoutchouc selon l'une quelconque des revendications précédentes, **caractérisée en ce que** le matériau de la lame en caoutchouc, au moins dans l'état non vulcanisé, contient en outre un accélérateur de vulcanisation.

7. Lame en caoutchouc selon la revendication 6, **caractérisée en ce que** l'accélérateur de vulcanisation est un sulfénamide, une guanidine, un thiuram, une alkylthiazolidinethione et/ou un thiazole.

8. Lame en caoutchouc selon la revendication 7, **caractérisée en ce que** le sulfénamide est un thiazolesulfénamide.

9. Lame en caoutchouc selon l'une quelconque des revendications 7 à 8, **caractérisée en ce que** l'accélérateur de vulcanisation, au moins dans l'état non vulcanisé de la lame en caoutchouc, est contenu à raison de 0,1 à 8% en poids par rapport à la teneur totale en composants de caoutchouc dans le matériau de la lame en caoutchouc.

10. Lame en caoutchouc selon l'une quelconque des revendications précédentes, **caractérisée en ce qu'**un accélérateur de vulcanisation secondaire est prévu sous forme d'un alkyldithiophosphate de métal de transition.

11. Lame en caoutchouc selon l'une quelconque des revendications précédentes, **caractérisée en ce qu'**un mélange de chloroprène et de caoutchouc naturel, de polyisoprène et/ou d'au moins un caoutchouc naturel partiellement époxydé est prévu comme composant de caoutchouc.

12. Lame en caoutchouc selon la revendication 11, **caractérisée en ce que** le chloroprène est contenu à raison d'au moins 20% en poids par rapport à la teneur totale en composants de caoutchouc.

13. Lame en caoutchouc selon la revendication 11 ou 12, **caractérisée en ce que** le caoutchouc naturel, le polyisoprène ou le caoutchouc époxydé est contenu à raison d'au moins 30% en poids par rapport à la teneur totale en composants de caoutchouc.

14. Lame en caoutchouc selon l'une quelconque des revendications précédentes, **caractérisée en ce que** le matériau de la lame en caoutchouc contient en outre un oxyde métallique.

15. Utilisation d'une lame en caoutchouc selon au moins l'une quelconque des revendications précédentes dans des raclettes d'essuyage pour des utilisations mobiles ou dans des joints de porte.
